# EUROPEAN PATENT APPLICATION

(11) **EP 2 207 136 A1**
(43) Date of publication of application: **14.07.2010**
(21) Application number: 09015964.1
(22) Date of filing: 23.12.2009
(51) Int. Cl.: G06Q 30/00, G06Q 10/00

(54) **Preparing a time-sensitive delivery request**

(30) Priority: 30.12.2008 US 346553
(71) Applicant: SAP AG, 69190 Walldorf (DE)
(72) Inventor: Kienzle, Stefan, 69190 Walldorf (DE)
(74) Representative: Müller-Boré & Partner Patentanwälte

(57) **Abstract**

Some implementations provide a system for preparing a time-sensitive delivery request at least a predefined interval of time before the delivery request is to be forwarded to a supplier. This delivery request may be a request for a component that is to be assembled as part of a production order. This delivery request may be created by a detail-planning system and stored in a resource-planning system. This delivery request may be forwarded to the supplier upon determining that assembly of the production order has reached a first reporting point.

## Description

### TECHNICAL FIELD

This document relates to preparing a time-sensitive delivery request in an automated component request system.

### BACKGROUND

A manufacturer is frequently required to order a component from a supplier in order to assemble a product. For example, a manufacturer producing an automobile may have to order an engine from a supplier in order to assemble the automobile. In order to economize assembly of a product, a manufacturer may us a just-in-time/just-in-sequence ("JIT/JIS") strategy. A JIT/JIS strategy is a time-sensitive ordering and delivery strategy in which a supplier delivers a requested component at the time and in the sequence in which the component is to be assembled by a manufacturer. A manufacturer can benefit from a JIT/JIS strategy by not having to store a component from a supplier and by being able to delay ordering a component until it will be used in the assembly of a product.

### SUMMARY

The invention relates to preparing a time-sensitive delivery request.

Certain implementations provide a system or method for preparing a time-sensitive delivery request at least a predefined interval of time before the delivery request is to be forwarded to a supplier. This delivery request may be a request for a component that is to be assembled as part of a production order. The delivery request may be created by a detail-planning system and stored in a resource-planning system. The resource-planning system may store the delivery request in a cache. In such implementations, the system or method may also include determining when to forward the delivery request to the supplier and forwarding the delivery request to the supplier. Determining when to forward the delivery request to the supplier may include determining whether assembly of the production order has reached a first reporting point. In such implementations, the system or method may also include updating the delivery request account for a change in the component, a quantity of the component, a consumption point for the component, and/or a time for delivery of the component. Updating the delivery request to account for a change in the consumption point for the component may occur in order to balance a production load among multiple assembly lines.

In one implementation, a method for preparing a time-sensitive delivery request includes identifying a production order corresponding to a product that is scheduled to be produced by a manufacturer. The production order involves assembly of multiple components and including at least a first component. The first component is to be requested at a first future time from a supplier for time-sensitive delivery in performing the production order. The method further includes creating, at least a predefined interval before the first future time, a delivery request to be forwarded on behalf of the manufacturer to the supplier. The delivery request is created to request delivery of the first component from the supplier to the manufacturer. The method further includes storing the delivery request in an inactive state. The delivery request is configured to be forwarded to the supplier at the first future time.

In one implementation, a method for making a time-sensitive delivery request includes determining that a production order in progress has reached a first reporting point. The production order involves assembly of multiple components and corresponds to a product that is scheduled to be produced by a manufacturer. The method further includes identifying a delivery request that was created in advance and stored in an inactive state. The delivery request is configured to be forwarded on behalf of the manufacturer to a supplier to request delivery of a first component for the production order. The method further includes forwarding the delivery request to the supplier in response to determining that the production order has reached the first reporting point.

Implementations can provide any or all of the following advantages. Processing of JIT/JIS requests can be made more efficient. Requests to a supplier for delivery can be prepared ahead of time, placed in an inactive state and activated as needed. Processing of JIT/JIS requests can be scheduled to avoid burdening critical systems at sensitive times.

The details of one or more embodiments are set forth in the accompanying drawings and the description below. Other features and advantages will be apparent from the description and drawings, and from the claims.

### DESCRIPTION OF DRAWINGS

FIG. 1 is a diagram of a system that can be used to prebuild and manage component delivery requests for a production order.
FIG 2 is a schematic diagram a process that, once executed, can prebuild delivery requests for a production order at a time before the delivery requests are to be sent to a supplier system.
FIG 3 is a schematic diagram of a process that, once executed, can forward an inactive delivery request to a supplier system, monitor the status of the delivery request, and receive the component specified in the delivery request.
FIG 4 is a block diagram of a computing system that can be used in connection with computer-implemented methods described in this document.

Like reference symbols in the various drawings indicate like elements.

### DETAILED DESCRIPTION

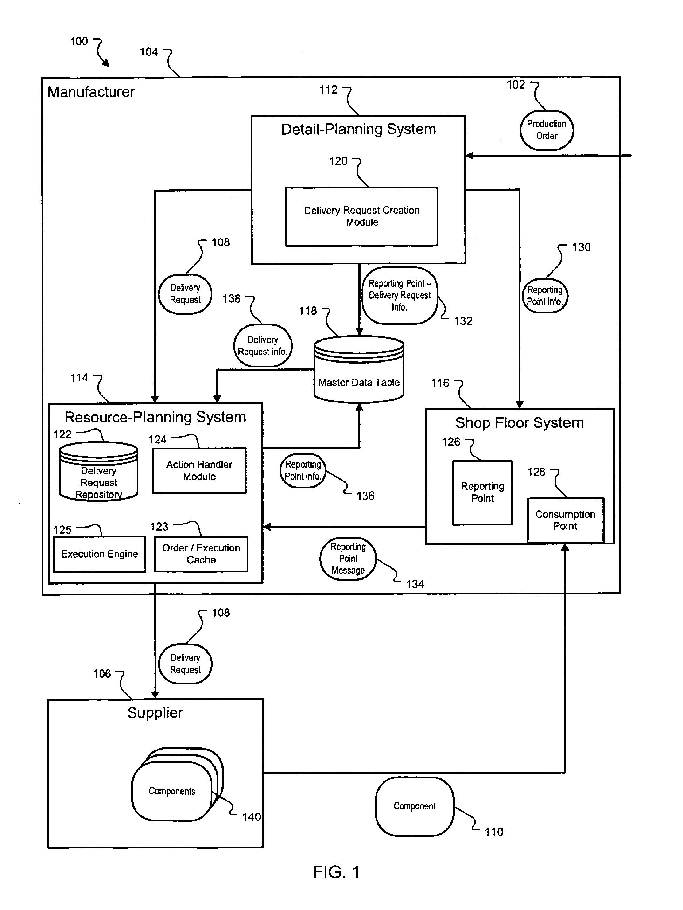

FIG. 1 is a diagram of an example system 100 that can be used to prebuild and manage component delivery requests for a production order 102. The system 100 can include at least one manufacturer system 104 and at least one supplier system 106. Manufacturer system 104 and supplier system 106 may include computers, servers, or some other computer-based system that can be operated by a person or entity.

The manufacturer system 104 may receive or create the production order 102. The production order 102 can direct the manufacturer system 104 to produce a product through the sequential assembly of multiple components. Regarding these multiple components, the manufacturer system 104 may provide a supplier system, such as supplier system 106, with a delivery request 108 for a component that is not on hand. Preferably, the supplier system 106 will deliver a requested component 110 at the time and in the sequence the component 110 is to be assembled by the manufacturer system 104. Such timely delivery can be termed "just-in-time/just-in-sequence" ("JIT/JIS") in some implementations and can provide the manufacturer system 104 with the benefit of reduced or eliminated storage/handling requirements before assembly.

The system 100 can provide the manufacturer system 104 with improved efficiency and accuracy regarding transmission of delivery request 108 to supplier system 106. For example, the system 100 can accomplish this by creating delivery request 108 prior to assembly of production order 102 and by forwarding delivery request 108 to supplier system 106 once assembly of production order 102 has progressed to a predetermined point. System 100 may reduce or eliminate the amount of processing to be done at a critical time by prebuilding delivery request 108, for example providing greater accuracy and efficiency.

The manufacturer system 104 can include a detail-planning system 112, a resource-planning system 114, a shop floor system 116, and a master data table 118. The detail-planning system 112 may manage aspects of production related to sequential assembly of components and daily production planning, including the creation of delivery request 108, to name a few examples. The resource-planning system 114 can manage aspects of production related to component delivery requests and component consumption, including forwarding delivery request 108 to supplier system 106. The shop floor system 116 can manage aspects of component assembly and reporting regarding the progress of a production order, including informing resource-planning system 114 when it is time to forward delivery request 108 to supplier system 106. The master data table 118 can manage information related to which notifications from shop floor system 116 indicate that delivery request 108 should be forwarded to supplier system 106.

The detail-planning system 112 can receive the production order 102 and, in response, create delivery request 108 for a component that is to be requested from supplier system 106 at a future time. The detail-planning system 112 may be connected to the resource-planning system 114, the shop floor system 116, and the master data table 118. Through these connections, the detail-planning system 112 can provide the created delivery request 108 to the resource-planning system 114 and information regarding the delivery request 108 to the shop floor system 116 and the master data table 118. The detail-planning system 112 may perform these operations during a time when the manufacturer system 104 is not assembling products or when the manufacturer system 104 is experiencing a light assembly load.

The detail-planning system 112 can include a delivery request creation module 120 that creates delivery requests in response to receiving production order 102. The delivery request creation module 120 can create delivery request 108 at some time prior to production of order 102. For example, the delivery request creation module 120 can create delivery request the day/night before order 102 is scheduled for assembly. The delivery request creation module 120 may also generate the information provided to the shop floor system 116 and the master data table 118.

The resource-planning system 114 can store the delivery request 108 received from the detail planning system 112. The delivery request 108 may be stored in an inactive state by the resource-planning system 114. The resource-planning system 114 may be connected to the detail-planning system 112, the shop floor system 116, the master data table 118, and the supplier system 106. Through these connections, the resource-planning system 114 can receive a notification from the shop floor system 116 that it is time to send a delivery request to supplier system 106, determine which delivery request corresponds to the notification via the master data table 118, and forward delivery request 108 to supplier system 106.

The resource-planning system 114 can include a delivery request repository 122, an order/execution cache 123, an action handler module 124, and/or an execution engine 125. The delivery request repository 122 can store delivery requests, such as delivery request 108, received from the detail-planning system 112. The order/execution cache 123 can be memory that serves as a cache for production orders reduced to components that are to be timely requested from a supplier system. The order/execution cache 123 can receive a reduced production order from the detail-planning system 112. The order/execution cache 123 may be referenced to quickly determine which of multiple notifications received by the resource-planning system 114 from the shop floor system 116 correspond to a component to be timely requested from the supplier system 106.

The action handler module 124 can determine which of the delivery requests stored in the delivery request repository 122 to forward to supplier system 106 in response to a notification from the shop floor system 116. The action handler module 124 may make this determination by referencing the order/execution cache 123 and/or the master data table 118. The action handler module 124 may also activate a delivery request stored in an inactive state in the delivery request repository 122 in upon determination it is time to forward the delivery request to the supplier system 106.

In some implementations, the action handler module 124 may be located in the detail-planning system 112. In other implementations, the action handler module 124 may not be located in either the resource-planning system 114 or the detail-planning system 112.

The execution engine 125 can forward the delivery request determined by the action handler module 124 to the supplier system 106. The execution engine 125 may update and manage the status of the delivery request after it is forwarded to the supplier system 106.

The shop floor system 116 may monitor the progress of order 102 per instructions received from the detail-planning system 112. Following the received instructions, the shop floor system 116 can notify the resource planning system 114 when production of order 102 has reached a certain point. The shop floor system 116 may accomplish both of these functions through connections with the detail-planning system 112 and the resource-planning system 114.

The shop floor system 116 can include one or more reporting points 126 and one or more consumption points 128. The reporting point 126 can be the point in assembly of production order 102 when the shop floor system 116 notifies the resource planning system 114, per the detail-planning system's 112 instructions. There can be many reporting points, such as reporting point 126, in the shop floor system 116. The consumption point 128 is the point in the shop floor system where component 110 is to be used, and thus delivered there on behalf of supplier system 106.

Master data table 118 can store information provided by the detail-planning system 112 that indicates which delivery request stored in the resource-planning system 114 is indicated by a reporting point notification from the shop floor system 116. The master data table 118 may be referenced by the resource-planning system 114 in response to a notification from the shop floor system 116. The master data table 118 may be connected to the detail-planning system 112 and the resource-planning system 114. In some implementations, the master data table 118 may be located in the resource-planning system. In other implementations, the master data table 118 may be located in the detail-planning system 112.

The production order 102 received or created by the manufacturer system 104 can specify the assembly of multiple components. Of the multiple components, it is likely that for only some there will be a delivery request, such as delivery request 108, created by the detail-planning system 112. Components the manufacturer system 104 does not have on hand or components for which a supplier system 106 requires advance notice may require the creation of a delivery request. For example, a production order 102 for an automobile may specify the assembly of one thousand components, including an engine and a screw, among other components. There would likely be a delivery request 108 created for the engine component but not for the screw component - the manufacturer system 104 is likely to request delivery of a component that may require customizing and/or a component for which there may be many of options to select from.

Once the production order 102 is at the detail-planning system 112 for planning, the detail-planning system 112 determines how, when, and where the production order 102 will be produced. Part of this process involves the delivery request creation module 120 reviewing the production order 102 and determining which components are to be requested from a supplier system, such as supplier system 106. The delivery request creation module 120 may make this determination by accessing a knowledge base or data table with information regarding which components are to be requested from a supplier system. After making a determination for each component in the production order 102, the delivery request creation module 120 produces a delivery request 108 for each component that is to be requested from a supplier system 106.

The delivery request 108 may include: an identifier for the component 110 to be requested, a requested quantity of component 110, an identifier for production order 102, the reporting point 126 in the shop floor system 116, the consumption point 128 where the supplier system 106 should deliver component 110, a time when supplier system 106 should deliver component 110, and/or a sequence number for delivery and assembly of component 110.

In some implementations, the manufacturer system 104 may have multiple production lines that are capable of producing order 102. In such an implementation, the delivery request creation module 120 may look at the load amongst these multiple production lines to determine on which line order 102 should be produced and where, on the determined line, supplier system 106 should be informed to deliver component 110. For example, with two production lines capable of producing order 102, if a first line has a heavier work load than a second line, the delivery request creation module 120 may determine order 102 should be produced on the second line. As such, delivery request creation module 120 may create delivery request 108 specifying the component 110 should be delivered to a location on the second line.

The delivery request creation module 120, or some other module in the detail-planning system 112 that is not provided, may provide the shop floor system 116 and the master data table 118 with information regarding a delivery request 108 created from production order 102. This information may be provided concurrent to creation of delivery request 108. The information provided to the shop floor system 116 can be reporting point information 130. The reporting point information 130 can include: the reporting point 126 in the production of order 102 when the delivery request 108 should reported to the resource-planning system 114 and/or an identifier for production order 102. The reporting point can be identified by a location in the shop floor system 116 and/or by the assembly of a component in the production order 102.

The information provided to the master data table 118 can be reporting point-delivery request information 132. The reporting point-delivery request information 132 can include an association between a reporting point in the shop floor system 116 and a delivery request to be forwarded to supplier system 106 by resource-planning system 114. Such an association may include the following: an identifier for reporting point 126, an identifier for delivery request 108, and/or an identifier for production order 102.

In some implementations, the master data table 118 may not be included in manufacturer system 104. In such an implementation, reporting point-delivery request information 132 may not be generated by detail-planning system 112. Furthermore, in such an implementation the reporting point information 130 may be supplemented to include an identifier for delivery request 108 in addition to the identifier for reporting point 126 and the identifier for production order 102, as previously mentioned.

Once delivery request 108 is created by the delivery request creation module 120 it may be sent by the detail-planning system 112 to the resource planning system 114. Once reporting point information 130 and reporting point-delivery request information 132 are created, they may be sent by the detail-planning system 112 to the shop floor system 116 and the master data table 118, respectively. In some implementations, the delivery request 108, the reporting point information 130, and the reporting point-delivery request information 132 may not be sent until all components contained in the production order 102 have been reviewed by the delivery request creation module 120 and the detail planning system 112.

The delivery request creation module 120 and the detail-planning system 112 may create and send delivery request 108, reporting point information 130, and reporting point-delivery request information 132 at a point in time prior to production of order 102 has begun. For example, a delivery request 108, a reporting point information 130, and a reporting point-delivery request information 132 for an order 102 to produce an automobile may be created and sent by the delivery request creation module 120 and the detail-planning system 112 one day before production of the automobile is scheduled to commence.

In some implementations, the delivery request creation module 120 and the detail-planning system 112 may create and send delivery request 108, reporting point information 130, and reporting point-delivery request information 132 only at specified times. In some implementations, the specified time may include when the detail-planning system 112 and/or the manufacturer system 104 are not assembling production orders 102 or are experiencing a light assembly load. In other implementations, the specified time may include a specific recurring time period, such as every night at 6:00 P.M.

In some implementations, the delivery request creation module 120 and the detail-planning system 112 may receive a modification to production order 102 after production has started. In such an implementation, the delivery request creation module 120 and the detail-planning system 112 can review the modification to order 102 and provide the resource-planning system 114, the shop floor system 116, and the master data table 118 with an updated delivery request 108, an updated reporting point information 130, and an updated reporting point-delivery request information 132, respectively.

In some implementations, all production orders 102 scheduled to be produced within a specified period of time may be batch processed by the delivery request creation module 120 and the detail-planning system 112. In such an implementation, the delivery request creation module 120 and the detail-planning system 112 may create and send delivery requests 108, reporting point information 130, and reporting point-delivery request information 132 for each production order 102 that is scheduled to be produced by manufacturer system 104 within the specified period of time. For example, all production orders 102 scheduled to be produced by manufacturer system 104 tomorrow may be batch processed today by the delivery request creation module 120 and the detail-planning system 112.

In some implementations, the delivery request creation module 120 may reduce the production order 102 down to the components that are to be requested from the supplier system 106. For example, if a production order specifies the assembly of 3,000 components and only 100 are to be timely requested from a supplier system, the delivery request creation module 120 may reduce the production order down to information regarding the 100 components to be timely requested. The delivery request creation module 120 may send the reduced production order to the resource-planning system 114. The delivery request creation module 120 may reduce and send a reduced production order to the resource-planning system 114 in conjunction with the delivery request 108 being created and sent.

In implementations where the resource-planning system 114 is sent a reduced production order from the delivery request creation module 120, the resource-planning system 114 may store the reduced production order in the order/execution cache 123.

In response to receiving delivery request 108 from the detail-planning system 112, the resource-planning system 114 may store delivery request 108 in the delivery request repository 122. The delivery request repository 122 store the delivery request 108 using a file system and/or a data table. The delivery request repository 122 may provide a timestamp for delivery request 108 indicating the time the request 108 was received by the resource-planning system 114.

In some implementations, the resource-planning system 114 may flag delivery requests 108 stored in the delivery request repository 122 for more than a specified period of time. The resource-planning system 114 may inquire as to the status of production orders 102 with delivery requests 108 that have been flagged. For example, the resource-planning system 114 may inquire as to the status of a production order 102 for which a delivery request 108 was received 49 hours earlier when the specified period of time is 48 hours. Such an inquiry may involve communication with the detail-planning system 112 and/or the shop floor system 116 regarding the production order 102.

After storing the delivery request 108 in the delivery request repository 122, the resource-planning system 114 may wait for notification from the shop floor system 116 that the production order 102 has reached reporting point 126. Waiting for notification from the shop floor system 116 may be conducted in the resource-planning system 114 by the action module handler 124.

The master data table 118 can store the reporting point-delivery request information 132 received from the detail-planning system 112. After storing the reporting point-delivery request information 132, the master data table 118 may wait for an inquiry from the resource-planning system 114 regarding the delivery request 108 that corresponds to a notification received from the shop floor system 116.

In response to receiving the reporting point information 130 from the detail-planning system 112, the shop floor system 116 can begin monitoring the reporting point 126 specified in the reporting point information 130. The shop floor system 116 monitors the progress of production order 102 reaching reporting point 126. In some implementations, the reporting point 126 can be a specific location where components are assembled. In other implementations, the reporting point 126 can be a specific component that is assembled in the production order 102.

Once production order 102 has reached reporting point 126, the shop floor system 116 notifies the resource-planning system 114 with a reporting point message 134. The reporting point message 134 can be a message notifying the resource-planning system 114 that production order 102 has reached reporting point 126. The reporting point message 134 can include an identifier for production order 102 and/or an identifier for reporting point 126.

The reporting point message 134 can be created by the shop floor system 116 at the time the production order 102 reaches the reporting point 126. In some implementations, the reporting point message 134 may be created at a time prior to the production order 102 reaching the reporting point 126. The time prior may be when reporting point information 130 is received from the detail-planning system 112, when the shop floor system 116 has a light workload, or a predetermined time. For example, regarding a predetermined time, at 6:00 P.M. reporting point messages 134 may be created for all reporting point information 130 received during the previous 24 hours.

In some implementations, the reporting point message 134 may be generated by the detail-planning system 112 and sent to the shop floor system 116 at the same time as the reporting point information 130. In such an implementation, the shop floor system 116 can store the received reporting point message 134 in a repository within the shop floor system 116. Such a repository may be similar to the delivery request repository 122. Additionally, once production order 102 reaches reporting point 126, the shop floor system 116 can forward reporting point message 134 from the repository to the resource-planning system 114.

In implementations where the master data table 118 is not present (as described above), the reporting point message 134 may also include an identifier for the delivery request 108 that corresponds to the reporting point 126 for production order 102.

The reporting point message 134 sent to the resource-planning system 114 by the shop floor system 116 may be received by the action handler module 124. The action handler module 124 can determine which of the delivery requests 108 contained in the delivery request repository 122 are to be forwarded to the supplier system 106 in response to the reporting point message 134. To make such a determination, the action handler module may query the master data table 118. Such a query of the master data table 118 may include sending the master data table 118 a reporting point information 136. The reporting point information 136 can include information received from the reporting point message 134. The reporting point information 136 may include an identifier for production order 102 and/or an identifier for reporting point 126. After sending the information to the master data table 118, the action handler module 124 can wait for a response.

In some implementations, prior to querying the master data table 118 the action handler module 124 may reference the order/execution cache 123 upon receiving the reporting point message 134. For a single production order there may be hundreds of reporting point messages generated and sent by the shop floor system 116, of which only a portion may be relevant to a delivery request. To efficiently determine which of the reporting point messages is relevant, the action handler module 124 may reference the order/execution cache 123. Referencing the order/execution cache 123 may involve determining whether a reporting point message 134 corresponds to information contained in a reduced production order cached in the order/execution cache 123. If a reporting point message 134 does not correspond to information contained in the order/execution cache 123, then the subsequent steps regarding forwarding a delivery request may not be performed. If a reporting point message 134 does correspond to information contained in the order/execution cache 123, then the subsequent steps regarding forwarding a delivery request may be performed.

In some implementations, the order/execution cache 123 may not be present. In such an implementation, instead of referencing the order/execution cache 123, the action handler module 124 may reference a cache and/or file system that contains unreduced production orders (e.g., a production order containing information regarding all components to be assembled) in order to determine whether a reporting point message 134 corresponds to a delivery request. Referencing an unreduced production order may involve sifting through information regarding thousands of components and, once a component corresponding to the reporting point message 134 is located, determining whether the component corresponds to a delivery request. By contrast, referencing the order/execution cache 123 may involve sifting through information regarding hundreds of components, wherein presence of a component corresponding to the reporting point message 134 in a reduced production order in the order/execution cache 123 may indicate the reporting point message 134 relates to a delivery request.

Upon receiving the reporting point information 136 from the action handler module 124, the master data table 118 may reference the reporting point-delivery request information 132 previously received from the detail-planning system 112 and stored in the master data table 118. Using the reporting point information 136, the master data table 118 can ascertain to which delivery request 108 the reporting point message 134 corresponds. Upon ascertaining the delivery request 108, the master data table 118 may send the action handler module 124 delivery request information 138. The delivery request information 138 may include an identifier for the delivery request 108.

In some implementations the action handler module 124 may be located in the detail-planning system 112. In such an implementation the shop floor system 116 can provide the reporting point message 134 to the action handler module 124 located in the detail-planning system 112 in response to the production order 102 reaching the reporting point 126. The reporting point information 136 can be sent from the action handler module 124 located in the detail-planning system 112 to the master data table 118 in response to the detail-planning system 112 receiving the reporting point message 134. The master data table 118 can send the delivery request information 138 to the action handler module 124 located in the detail-planning system 112 after determining the identity of the delivery request 108. The action handler module 124 located in the detail-planning system 112 can send the resource-planning system 114 the identity of the delivery request 108 to be forwarded to the supplier system 106 in response to receiving the delivery request information 138 from the master data table 118.

In some implementations the action handler module 124 may not be located in either the detail-planning system 112 or the resource-planning system 114. In such an implementation the shop floor system 116 may provide the reporting point message 134 directly to the action handler module 124 located outside the detail-planning system 112 and the resource-planning system 114. Depending on the location of the master data table 118, the action handler module 124 can send the reporting point information 136 to and receive the delivery request information 138 from the detail-planning system 112, the resource-planning system 114, or some other system/module containing the master data table 118. The action handler module 124 can send the resource-planning system 114 the identity of the delivery request 108 to be forwarded to the supplier system 106 in response to receiving the delivery request information 138 from the master data table 118.

In implementations where manufacturer system 104 does not contain a master data table 118, the action handler module 124 can receive the identity of the delivery request 108 to be forwarded to the supplier system 106 in the reporting point message 134. In such an implementation, it may not necessary to do the aforementioned steps regarding the reporting point information 136, the master data table 118, and/or the delivery request information 138.

Upon receiving the delivery request information 138 from the master data table 118, the action module handler 124 can locate the delivery request 108 in the delivery request repository 122 using the delivery request information 138. The action handler module 124 may instruct the execution engine 125 to forward the located delivery request 108 to the supplier system 106. Upon being instructed by the action handler module 124, the execution engine 125 may forward the delivery request 108 to the supplier system 106. In some implementations, the execution engine 125 may be notified to forward an delivery request in the delivery request repository 122 by the action handler module 124. In some implementations, the execution engine 125 may be provided with a delivery request to be forwarded by the action handler module 124.

In some implementations, the action handler may activate the located delivery request 108. Activating a delivery request 108 contained within the delivery request repository 122 may include moving the previously inactive delivery request 108 into a queue of active delivery requests to be forwarded to a supplier system 106 and/or marking the previously inactive delivery request 108 as active. In some implementations, the execution engine 125 may determine the delivery requests to be forwarded to the supplier system 106 by monitoring a queue of active delivery requests and/or the delivery request repository 122 for delivery requests indicated as active.

The supplier system 106 receives the delivery request 108 from the resource-planning system 114 and, with the information contained in the delivery request 108, can send component 110 to manufacturer system 104. The supplier system 106 may have to determine from the delivery request 108 which one of multiple components 140 provided by the supplier system 106 the manufacturer system 104 requested. To make this determination, the supplier system 106 may reference the information provided in the delivery request 108, such as an identifier for component 110, with a data table or knowledge base located in the supplier system 106.

In some implementations, the delivery request 108 provided to the supplier system 106 may constitute a production order 102, requiring assembly of multiple components by the supplier system 106. In an implementation where the manufacturer system 104 has previous knowledge the supplier system 106 will have to request a component from another supplier system in response to delivery request 108, the manufacturer system 104 may perform the prebuilding functions of the supplier system's 106 detail-planning system (similar to 112). For example, the manufacturer system 104 may provide the supplier system with a delivery request (similar to 108), reporting point information (similar to 130), and/or reporting point-delivery request (similar to 132) for delivery to the supplier system's 106 resource-planning system (similar to 114), shop floor system (similar to 116), and master data table (similar to 118), respectively.

In some implementations, the resource-planning system 114 may continue to monitor the progress of delivery request 108 after it has been forwarded to supplier system 106. Monitoring may be performed by the execution engine 125. Such monitoring can include the resource-planning system 114 providing the supplier system 106 with updates regarding the delivery request 108. Updates to the delivery request 108 may be generated by the resource-planning system 114 and/or generated by the detail-planning system 112, the shop floor system 116, and/or a manual input by the manufacturer system 104. Updating may be performed by the execution engine 125. For example, the resource-planning system 114 may inform the supplier system 106 of changes to the quantity of the component 110 requested, the consumption point 128, the requested delivery time, the sequence number of the component 110, and/or a substitution of a second component for the component 110.

Monitoring by the resource-planning system 114 may also include receiving updates from the supplier system 106 regarding the status of the delivery request 108. Updates from the supplier system 106 may be received by the execution engine 125. The resource-planning system 114 may relay such an update to the detail-planning system 112, the shop floor system 116, and/or some other system/module not depicted within the manufacturer system 104. For example, the supplier system 106 may inform the resource-planning system 114 regarding the availability of component 110, a change in a delivery time for the component 110, and/or a substitution of a second component for component 110.

The supplier system 106 can deliver component 110 to consumption point 128. Consumption point 128 may be within the shop floor system 116 or in another part of the manufacturer system 104. Consumption point 128 corresponds to the location where component 110 can be assembled as part of production order 102. Component 110 may be a JIT/JIS component, meaning it is delivered at the time of assembly and in the proper assembly order.

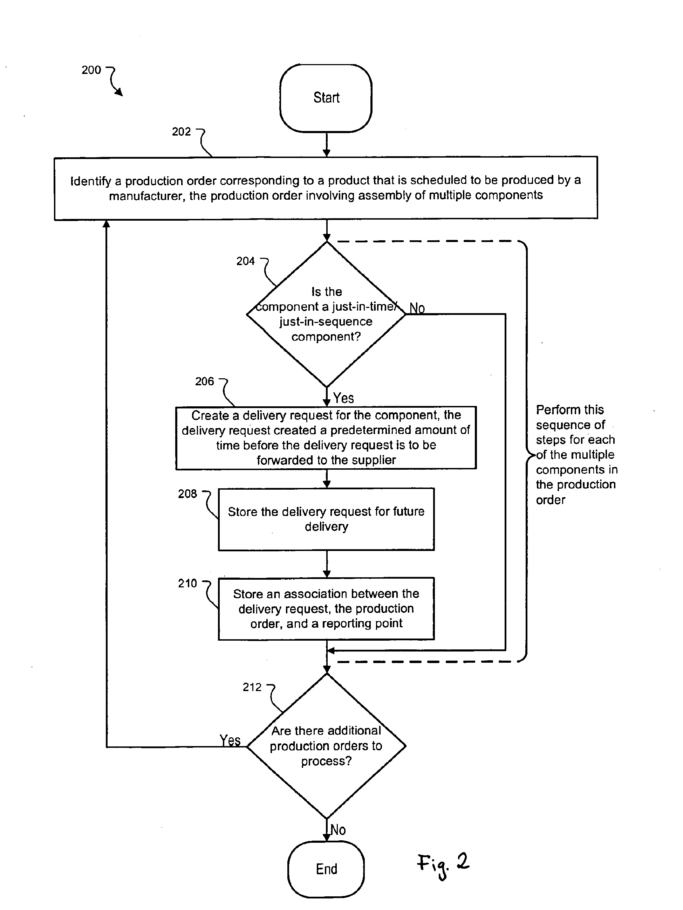

FIG. 2 is a schematic diagram of an example process 200 that, when executed, can prebuild delivery requests for a production order at a time before the delivery requests are to be sent to a supplier system. Process 200 can be performed, for example, on system 100 or some other system not depicted. More specifically, process 200 may be executed by a detail-planning system, such as detail-planning system 112. Process 200 may be performed on a computer, a server, or some other computer-based system that may be operated by a person or entity.

Process 200 may start at step 202 by identifying a production order corresponding to a product that is scheduled to be produced by a manufacturer system, the production order involving assembly of multiple components. A production order may, for example, direct the production of an automobile using one thousand components, one of the components being an engine. Identifying a production order may involve receiving a production order, retrieving a production order from a stored state, such as storage in a repository or data table, retrieving a production order from a queue of production orders, and/or generating a production order.

Identifying a production order may also involve parsing the production order into its multiple components and/or determining information associated with each component. Information associated with a component may include whether the component needs to be requested from a supplier system, when the request should be made, and/or the sequence in which the request should be delivered. Identifying a production order can occur at a predetermined interval of time before assembly of the production order is scheduled to take place. For example, identifying step 202 may take place the day/night before a production order is scheduled to be produced. After performing step 202, process 200 may proceed to step 204.

Process 200 may perform steps 204-210 for each component contained within a production order.

Process 200 may determine whether a component is a just-in-time/just-in-sequence ("JIT/JIS") component at step 204. A JIT/JIS component can be a component that a manufacturer system needs to order from a supplier system (e.g., the manufacturer system does not have the component on hand) and for which delivery from the supplier system is time and sequentially sensitive. Delivery may be time and sequentially sensitive for a component when a manufacturer system desires to install the component at the time of delivery (e.g., the component is not stored by the manufacturer system before assembly) in a specific assembly sequence of components. Determination of whether a component is a JIT/JIS component may involve referencing a data table or knowledge base storing information regarding production order components. Determination of a component's JIT/JIS status can occur at a predetermined interval of time before assembly of the production order is scheduled to take place.

If it is determined at step 204 that a component is a JIT/JIS component, the process 200 may proceed to create a delivery request for the component at, for example, step 206. If it is determined at step 204 that a component is not a JIT/JIS component, process 200 may proceed to perform step 204 for another component in the production order or, if step 204 has been performed for all components, may proceed to determine whether there are additional production orders to be processed at, for example, step 212.

Process 200 may, at step 206, create a delivery request for a component a predetermined amount of time before the delivery request is to be forwarded to the supplier system. A delivery request can be a request for delivery of a component made on behalf of a manufacturer system to a supplier system. The delivery request may request the supplier system to deliver the component to the manufacturer system at a specific time and location. The delivery request can be created at least a predetermined amount of time before the request is to be forwarded to the supplier system and/or a predetermined amount of time before assembly of the production order is scheduled to commence. For example, the delivery request may be created the day/night before the request will be forwarded to the supplier system and/or the day/night before the production order is scheduled for assembly.

Creating a delivery request at step 206 can include identifying the component to be requested, a quantity of the component to be requested, the production order, a point in the assembly of the production order at which the delivery request should be forwarded to the supplier system (e.g., a reporting point), a point to which the component should be delivered and/or assembled (e.g., consumption point), and a sequence in which the component should be delivered (e.g., a sequence number). Creating a delivery request at step 206 may be performed by a detail-planning system, such as detail-planning system 112, that is capable of managing aspects of production related to sequential assembly of components and daily production planning. After performing step 206, process 200 may proceed to step 208.

Process 200 may, at step 208, store a delivery request for future delivery. A delivery request may be stored in an inactive state and/or configured to be forwarded to a supplier system at a future time. Storage of a delivery request in an inactive state may include an identifier for an activity within the delivery request being marked as inactive and/or the delivery request being placed in an inactive queue or repository. A delivery request may be configured to be forwarded to a supplier system at a future time by the delivery request including information regarding when it should be forwarded to the supplier system. This information can include a specific time, a time relative to something else occurring (e.g., send the delivery request 2 hours after another delivery request is sent), and/or an event triggering the activation and release of the request (e.g., send the delivery request when the production order has reached point X).

In some implementations, step 208 may also involve reducing the production order down to the components that are to be requested from the supplier system and sending the reduced production order to an order/execution cache. Once a reduced production order is received at an order/execution cache, it may be added to the order/execution cache.

Storage of a delivery request for future delivery at step 208 can occur at least a predetermined amount of time before the request is to be forwarded to the supplier system and/or a predetermined amount of time before assembly of the production order is scheduled to commence. Process 200 may proceed to step 210 after executing step 208.

Step 208 may involve storing the delivery request in a resource-planning system, such as resource-planning system 114, capable of managing aspects of production related to component delivery requests and component consumption. Storing a delivery request in a resource-planning system may involve sending the delivery request, such as delivery request 108, from a detail-planning system, such as detail-planning system 112, to the resource-planning system, such as resource-planning system 114. A delivery request sent to a resource-planning system may be stored in a delivery request repository within the resource-planning system, such as delivery request repository 122 located within resource-planning system 114.

Process 200 may, at step 210, store an association between the delivery request, the production order, and a reporting point. A reporting point can be a point in the assembly of the production order at which the delivery request should be forwarded to the supplier system. An association may be a link between the delivery request, the production order, and the reporting point. For example, an association may be a tuple within a relational data table. Storage of an association at step 210 can occur at least a predetermined amount of time before the request is to be forwarded to the supplier system and/or a predetermined amount of time before assembly of the production order is scheduled to commence.

Step 210 may involve storing the association in a master data table, such as master data table 118. Storing an association in a master data table may involve sending the information to be stored in the association, such as reporting point-delivery point information 132, from a detail-planning system, such as detail-planning system 112, to the master data table, such as master data table 118.

Process 200 may proceed to step 212 after performing step 210 or may return to conduct step 204 for another component in the production order. Steps 204-210 may be performed for each component contained within a production order.

Process 200 may, at step 212, determine whether there are additional production orders to be processed. Such a determination may involve determining whether a batch production order processing scheme is being used. Under a batch production order processing scheme, multiple production orders (e.g., a batch) may be processed in succession by process 200. Production order placed into a batch may have common characteristics. For example, all production orders scheduled to be assembled the next day may be placed into a batch of production orders.

If it is determined at step 212 that there are additional orders to be processed, process 200 may proceed to step 202 for processing of one of the additional production orders. If it is determined there are no additional orders to process, process 200 can end after step 212.

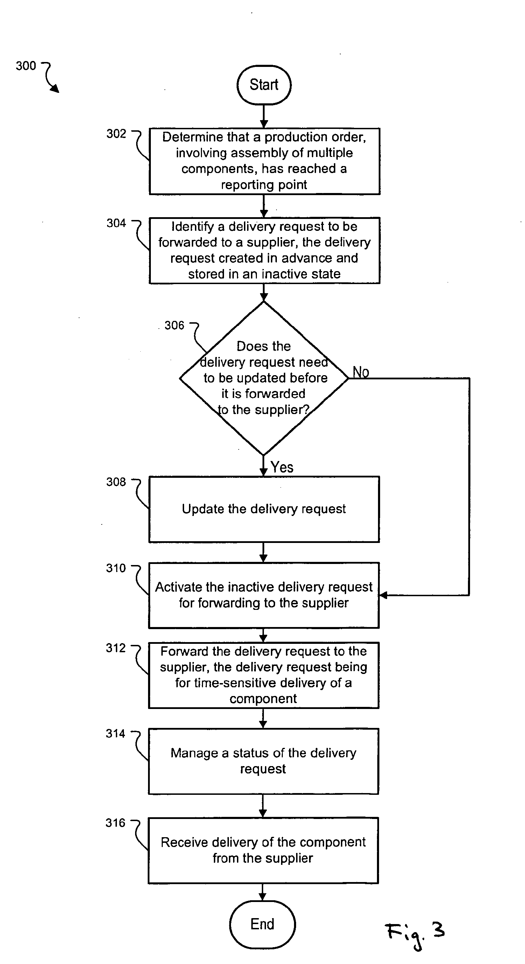

FIG. 3 is a schematic diagram of an example process 300 that, once executed, can forward an inactive delivery request to a supplier system, monitor the status of the delivery request, and receive the component specified in the delivery request. Process 300 can be performed, for example, on system 100 or some other system not depicted. More specifically, process 300 may be executed by a resource-planning system, such as resource-planning system 114. Process 300 may be performed on a computer, a server, or some other computer-based system that may be operated by a person or entity.

Process 300 may begin, at step 302, by determining whether a production order has reached a reporting point. A production order may correspond to the production of a product and can direct the assembly of multiple components to produce the product. A production order may, for example, direct the production of an automobile using one thousand components, one of the components being an engine. A reporting point can be a point in the assembly of the production order at which the delivery request should be forwarded to the supplier system.

Determining that a production order has reached a reporting point may include receiving a message from a shop floor system, such as shop floor system 116, signifying the production order has reached the reporting point. A shop floor system can manage aspects of component assembly and reporting regarding the progress of a production order, including informing a resource-planning system, such as resource-planning system 114, with a reporting point message, such as reporting point message 134, that it is time to forward a delivery request, such as delivery request 108, to a supplier system, such as supplier system 106. A reporting point message can include an identifier for a production order, an identifier for a reporting point, and/or an identifier for a delivery request. Process 300 may proceed to step 304 after step 302.

Process 300 may, at step 304, identify a delivery request that was created and stored in advance to be forwarded to a supplier system. A delivery request can be a request for delivery of a component made on behalf of a manufacturer system to a supplier system. The delivery request may request the supplier system to deliver the component to the manufacturer system at a specific time and location. The delivery request may be stored in an inactive state and/or configured to be forwarded to a supplier system at a future time. The delivery request may have been created and stored in advance using a process, such as process 200, performed by a detail-planning system, such as detail-planning system 112. For example, a detail-planning system may have created the delivery request the day before assembly of the production order commenced and/or a reporting point message was received.

Identifying the delivery request may include referencing a master data table, such as master data table 118, using information related to the production order and the reporting point. For example, the master data table may be queried for an identifier for a delivery request using identifiers for the production order and the reporting point. The information used for identification may have been received in a reporting point message, such as reporting point message 134, from a shop floor system, such as shop floor system 116. The information referenced in the master data table, such as master data table 118, may have been previously placed there by a detail-planning system, such as detail-planning system 112, during the execution of a process, such as step 210 of process 200.

In some implementations, step 304 may include referencing an order/execution cache in order to determine whether progression of the production order to a reporting point indicates that a delivery request should be sent to a supplier system. The production order may reach many reporting points which do not correspond to a delivery request. Referencing an order/execution cache may include determining whether the production order reaching the reporting point corresponds to a reduced version of the production order contained in the order/execution cache. If the reporting point does correspond to the reduced version, then process 300 may perform steps 306-316. If the reporting point does not correspond to the reduced version, then process 300 may end.

After step 304, process 300 may, at step 306, ascertain whether the identified delivery request needs to be updated before it is forwarded to a supplier system. If it is determined that the request should be updated, process 300 may proceed to update the delivery request at step 308. If it is determined that the request does not need to be updated, process 300 may proceed to activate the delivery request at step 310.

Process may, at step 308, update a delivery request that has been identified as the delivery request to be forwarded to the supplier system. Updating the delivery request can include updating to account for changes to a quantity of the component being requested, a point where the requested component is to be delivered and/or assembled (e.g., a consumption point), a requested delivery time for the requested component, a sequence number of the requested component, and/or a substitution of another component for the requested component, wherein a consumption point is a location where the first component is delivered by the supplier system to the manufacturer system and where the first component is assembled by the manufacturer system.

A change to the consumption point for the requested component may be triggered by a production line balancing procedure. A production line can be a series of consumption points that are capable of assembling a product. A production line balancing procedure may determine whether there the workload of multiple comparable production lines is near even. If it is determined that a first production line (the production line in which the consumption point specified in the delivery request is located) has a heavier workload than a comparable second production line, the assembly of the production order may be shifted from the first to the second production line. As such, the consumption point may be changed from a consumption point on the first line to a consumption point on the second line. After step 308, process 300 may proceed to step 310.

Process 300 may, at step 310, activate the delivery request that is to be forwarded to the supplier system. The delivery request may have previously been stored in an inactive state by a process, such as process 200. Activation of may include marking the delivery request as active, retrieving the delivery request from a delivery request repository, such as delivery request repository 122, and/or placing in the delivery request in an active queue or repository. After step 310, process 300 may proceed to step 312.

Process may, at step 312, forward the delivery request to the supplier system. Forwarding may be conducted in response to determining that the production order has reached a reporting point. A resource-planning system, such as resource-planning system 114, may forward the delivery request, such as delivery request 108, from an execution engine, such as the execution engine 125, to a supplier system, such as the supplier system 106. The delivery request may direct the supplier system to provide time sensitive delivery of a component, such as component 110. After step 312, process 300 may proceed to step 314.

Process 300 may, at step 314, manage the status of the delivery request. Managing the status of the delivery request may include receiving a status update from the supplier system or forwarding a delivery request update to the supplier system. A status update can include information related to an availability of the requested component, a change in a time of delivery of the requested component, and/or an availability of a component that is a substitute for the requested component. A delivery request update can include information related to a change in a requested quantity of the component, a change in a time of delivery of the requested component, a change in a consumption point for the requested component, a change from the requested component to a substitution component, and/or a cancellation of the delivery request. Managing the status of the delivery request may be performed by a resource-planning system, such as resource-planning system 114, and/or an execution engine, such as the execution engine 125. Process 300 may proceed to step 316 after step 314.

Process 300 may, at step 316, receive the requested component from the supplier system. Receiving the component may include receiving it a specific time and location. The location may be the consumption point specified in the delivery request. The component may also be received as part of a specific sequence of components. The specific sequence of components may apply to all components being assembled as part of the production order or to only parts that are being received from a supplier system for the production order. After step 316, process 300 may end.

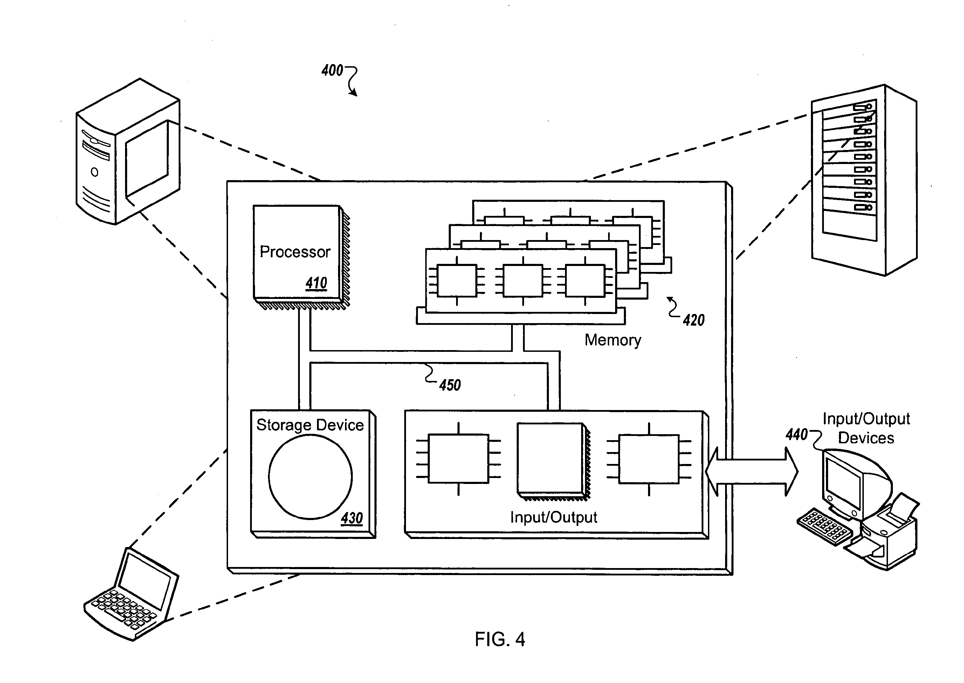

FIG 4 is a schematic diagram of a generic computer system 400. The system 400 can be used for the operations described in association with any of the computer-implement methods described previously, according to one implementation. The system 400 includes a processor 410, a memory 420, a storage device 430, and an input/output device 440. Each of the components 410, 420, 430, and 440 are interconnected using a system bus 450. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430 to display graphical information for a user interface on the input/output device 440.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 may be a floppy disk device, a hard disk device, an optical disk device, or a tape device.

The input/output device 440 provides input/output operations for the system 400. In one implementation, the input/output device 440 includes a keyboard and/or pointing device. In another implementation, the input/output device 440 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier, e.g., in a machine-readable storage device, for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

A number of implementations have been described. Nevertheless, it will be understood that various modifications may be made without departing from the spirit and scope of this disclosure. Accordingly, other implementations are within the scope of the following claims.

## Claims

1. A computer program product tangibly embodied in a computer-readable storage medium and comprising instructions that when executed by a processor perform a method for preparing a time-sensitive delivery request, the method comprising:
identifying a production order corresponding to a product that is scheduled to be produced by a manufacturer, the production order involving assembly of multiple components, at least a first component of which is to be requested at a first future time from a supplier for time-sensitive delivery in performing the production order;
creating, at least a predefined interval before the first future time, a delivery request to be forwarded on behalf of the manufacturer to the supplier to request delivery of the first component; and
storing the delivery request in an inactive state, the delivery request configured to be forwarded to the supplier at the first future time.

2. The computer program product of claim 1, wherein creating the delivery request comprises identifying the first component, a quantity of the first component, the production order, a first reporting point, a consumption point, and a sequence number,
wherein the first reporting point corresponds to performance of the production order reaching the first future time, wherein a consumption point comprises a location where the first component is to be delivered by the supplier, wherein the sequence number corresponds to the first component's place in a sequence of components delivered for the production order.

3. The computer program product of claim 1 or 2, further comprising storing an association between the first reporting point, the production order, and the delivery request in a master data table, and/or
further comprising determining whether the first component comprises a just-in-time/just-in-sequence component, wherein a just-in-time/just-in-sequence component is delivered at a time of assembly and in an assembly sequence, wherein a delivery request for the first component is created and stored only if the first component is determined to be a just-in-time/just-in-sequence component.

4. The computer program product of any one of the preceding claims, further comprising selecting, at least a predefined interval before the first future time, a subset of the production order by selecting information from the production order corresponding to components to be requested at a future time from a supplier for time-sensitive delivery,
wherein the subset of the production order comprises at least information from the production order corresponding to the first component; and
storing the subset of the production order in a cache, the subset of the production order to be referenced to verify the first future time.

5. The computer program product of any one of the preceding claims, wherein storing the delivery request comprises storing the delivery request in an resource-planning system, wherein the resource-planning system manages aspects of production related to component delivery requests and component consumption, and/or.
wherein creating the delivery request comprises creating the delivery request by a detail-planning system, wherein the detail-planning system manages aspects of production related to sequential assembly of components and daily production planning.

6. The computer program product of any one of the preceding claims, further comprising performing the identifying step, the creating step, and the storing step for each of a plurality of production orders, wherein the plurality of production orders comprises all production orders scheduled to be produced by the manufacturer within a period of time, preferably within the next day.

7. A computer program product tangibly embodied in a computer-readable storage medium and comprising instructions that when executed by a processor perform a method for making a time-sensitive delivery request, the method comprising:
determining that a production order in progress has reached a first reporting point, the production order involving assembly of multiple components and corresponding to a product that is scheduled to be produced by a manufacturer;
identifying a delivery request that was created in advance and stored in an inactive state, the delivery request configured to be forwarded on behalf of the manufacturer to a supplier to request delivery of a first component for the production order; and
forwarding the delivery request to the supplier in response to determining that the production order has reached the first reporting point.

8. The computer program product of claim 7, wherein the determining step, the identifying step, and the forwarding step are performed by a resource-planning system,
wherein the resource-planning system manages aspects of production related to component delivery requests and component consumption,.

9. The computer program product of claim 7 or 8, wherein determining that the production order has reached the first reporting point comprises receiving at the resource-planning system a message from a shop floor system signifying the production order has reached the first reporting point.

10. The computer program product of any one of claims 7 to 9, wherein identifying the delivery request comprises referencing a master data table using information related to the production order and the first reporting point, the information from the message received from the shop floor system.

11. The computer program product of any one of claims 7 to10, further comprising activating the delivery request, wherein activating the delivery request comprises moving the delivery request to an active queue, wherein delivery requests placed in the active queue are forwarded, and/or
further comprising updating the delivery request, wherein updating the delivery request comprises updating the delivery request to account for changes to a quantity of the first component, a consumption point for the first component, a requested delivery time for the first component, a sequence number of the first component, or a substitution of a second component for the first component, wherein a consumption point is a location where the first component is delivered by the supplier to the manufacturer and where the first component is assembled by the manufacturer.

12. The computer program product of any one of claims 7 to 11, wherein updating the delivery request to account for changes to the consumption point comprises changing the consumption point specified in the delivery request from a first consumption point to a second consumption point, wherein the first consumption point is part of a first production line and the second consumption point is part of a second production line,
wherein the first production line and the second production line are capable of assembling the product, and wherein the first consumption point and the second consumption point are both capable of assembling the first component, wherein changing the consumption point specified in the delivery request occurs when an amount of production orders for the first production line exceeds an amount of production orders for the second production line by a threshold amount.

13. The computer program product of any one of claims 7 to 12, further comprising managing the status of the delivery request, wherein managing the status of the delivery request comprises receiving a status update from the supplier or forwarding a delivery request update to the supplier, wherein the status update comprises information related to an availability of the first component, a change in a time of delivery of the first component, or an availability of a second component, wherein the second component is a substitute for the first component, wherein the delivery request update comprises information related to a change in a requested quantity of the first component, a change in a time of delivery of the first component, a change in a consumption point for the first component, a change from the first component to a second component, or a cancellation of the delivery request, and/or
further comprising receiving the first component from the supplier.

14. A system to manage delivery requests for a production order comprising:
a detail-planning system that identifies a production order corresponding to a product that is scheduled to be produced by a manufacturer, the production order involving assembly of multiple components, at least a first component of which is to be requested at a first future time from a supplier for time-sensitive delivery in performing the production order, the detail-planning system comprising:
a delivery request creation module that creates an inactive delivery request at least a predefined interval before the first future time, the delivery request corresponding to a request for delivery of the first component to be forwarded on behalf of the manufacturer to the supplier;
a resource-planning system connected to the detail-planning system, comprising:
a delivery request repository that receives and stores the inactive delivery request created by the detail-planning system, wherein the inactive delivery request is configured to be forwarded to the supplier at the first future time,
an action handler module that receives messages regarding progress of the production order and determines from the received messages when the production order has reached a first reporting point, the first reporting point corresponding to performance of the production order reaching the first future time, and
an execution engine that forwards the inactive delivery request to the supplier in response to an indication of the first future time from the action handler; and
a shop floor system connected to the detail-planning system and the resource-planning system, wherein the shop floor system monitors progress of the production order and sends messages to the action handler module according to an instruction received from the detail-planning system, wherein the instructions received direct the shop floor system to send a message to the action handler module when the production order reaches the first reporting point, the message indicating the production order reached the first reporting point.

15. The system of claim 14, further comprising:
a master data table connected to the detail-planning system and the resource-planning system, the master data table comprising an association between the first reporting point, the production order, and the delivery request, wherein the association is created by the detail-planning system, wherein the association is referenced by the resource-planning system in response receiving the reporting point message from shop floor system.
